# EUROPEAN PATENT APPLICATION

(11) **EP 4 234 281 A1**
(43) Date of publication of application: **30.08.2023**
(21) Application number: 21882441.5
(22) Date of filing: 25.08.2021
(51) Int. Cl.: B60C 27/12

(54) **TIRE CHAIN TIGHTENING DEVICE**

(30) Priority: 21.10.2020 JP 2020176841
(71) Applicant: Car Mate Mfg.co., Ltd., Tokyo 171-0051 (JP)
(72) Inventor: KITAHARA, Kazuhiro, Tokyo 171-0051 (JP); TANABE, Shigeru, Tokyo 171-0051 (JP)
(74) Representative: Lambacher, Michael
(86) International application number: PCT/JP2021/031220
(87) International publication number: WO 2022/085300

(57) **Abstract**

PROBLEM

To provide a tire chain tightening device that can prevent damage to an engagement part even when a tensile load equal to or more than a predetermined value is applied to a wire.

SOLUTION

A tire chain tightening device (10) feeds and winds a wire (38) by using a rotating body (24) included inside a casing (12). The tire chain tightening device (10) includes a first locking means (32) and a second locking means (36). The first locking means (32) suppresses rotation of the rotating body (24) to inhibit the wire (38) from being pulled out. The second locking means (36) operates due to a change generated in the wire (38) or in the rotating body (24) and is brought into contact with the rotating body (24) when a load that exceeds a tensile load normally applied to the wire (38) is applied.

## Description

### TECHNICAL FIELD

The present invention relates to a tire chain, in particular relates to a tire chain tightening device in which tightening by a wire is performed.

### BACKGROUND ART

Regarding a tire chain tightening device, for example, the tire chain tightening devices disclosed in Patent Documents 1 and 2 are known. The tightening devices disclosed in both documents are basically configured by disposing a rotating body for winding a wire, a locking means for suppressing rotation of the rotating body, and an operating means for operating the locking means. Here, the rotating body is equipped with a sawtooth-shaped gear, and by teeth disposed on the locking means meshing with the gear attached to the rotating body, the rotation of the rotating body is suppressed.

In the tightening device having such a configuration, by operating the operating means, it is possible to switch among a state for winding the wire, a state for pulling out the wire, and a locked state where the wire cannot be pulled out or wound.

### Citation List

### Patent Literature

Patent Document 1: Japanese Patent No. 3987978
Patent Document 2: Japanese Patent No. 4143931

### DISCLOSURE OF THE INVENTION

### PROBLEMS TO BE SOLVED BY THE INVENTION

In such tire chain tightening devices, actions of suppressing rotation of a rotating body by a locking means and preventing a wire from being unintentionally pulled out of the tightening device in a state of a tire chain being tightened are important.

However, in both the tightening devices disclosed in Patent Documents 1 and 2, a configuration in which the rotation of the rotating body is suppressed by engaging one or about two teeth disposed at a distal end of the locking means with a gear attached to the rotating body is employed. Accordingly, since in a case where a tire is idling and the like, the wire is pulled out by an unexpected force, an engagement part is likely to be damaged.

Therefore, the present invention has an object of providing a tire chain tightening device that can prevent damage to an engagement part even when a tensile load equal to or more than a predetermined value is applied to a wire.

### SOLUTIONS TO THE PROBLEMS

In order to achieve the above-described object, a tire chain tightening device according to the present invention feeds and winds a wire by using a rotating body included inside a casing. The tire chain tightening device includes a first locking means and a second locking means. The first locking means suppresses rotation of the rotating body to inhibit the wire from being pulled out. The second locking means operates due to a change generated in the wire or in the rotating body and inhibits the rotating body from rotating when a load that exceeds a tensile load normally applied to the wire is applied.

In the tire chain tightening device having the features as described above, it is preferred that the casing has a mounting base relative to a tightening point of the tire chain and a wire pull-out opening, a straight line connecting the mounting base to the wire pull-out opening is radially separated from a wire feed position in the rotating body, and the second locking means is configured to operate due to a movement of the wire pulled out of the casing in a radial direction of the rotating body. With such features, a configuration for operating the second locking means is not needed, and there is no need to manually operate the second locking means.

In the tire chain tightening device having the features as described above, the second locking means can be a lever having a point of effort and a point of action, the point of effort is moved by the movement of the wire, and the point of action is brought into contact with the rotating body. With such features, the second locking means surely acts on the rotating body.

In the tire chain tightening device having the features as described above, the second locking means can be configured to operate by sandwiching the wire. With such features, since the second locking means does not have an operating portion, assembly is facilitated.

Furthermore, in the tire chain tightening device having the features as described above, the second locking means can be a projection that is brought into contact with the rotating body being inclined due to the tensile load applied to the wire. With such features, since the second locking means is disposed by utilizing a gap inevitably disposed between the rotating body and the casing, a size of the tire chain tightening device is not likely to be increased.

### EFFECTS OF THE INVENTION

According to the tire chain tightening device having the features as described above, even when the tensile load equal to or more than a predetermined value is applied to the wire, damage to an engagement part can be prevented.

### BRIEF DESCRIPTION OF THE DRAWINGS

Fig. 1 is a drawing illustrating an internal configuration of a tire chain tightening device according to a first embodiment.
Fig. 2 is an exploded perspective view illustrating a configuration of the tire chain tightening device according to the first embodiment.
Fig. 3 is a drawing illustrating a state in which a first locking means operates in the tire chain tightening device according to the first embodiment.
Fig. 4 is a drawing illustrating a state in which a tensile load is applied to a wire in the state in which the first locking means operates in the tire chain tightening device according to the first embodiment.
Fig. 5 is a drawing illustrating a state in which a second locking means also operates in addition to the first locking means in the tire chain tightening device according to the first embodiment.
Fig. 6 includes drawings illustrating states in which positions of a first tightening point O, a second tightening point Q, and a feed point P of the wire vary in the tire chain tightening device according to the first embodiment.
Fig. 7 is a partially enlarged perspective view illustrating a first modification of a pushing means that pushes an operation lever of a second locking means to a wire side.
Fig. 8 is a partially enlarged perspective view illustrating a second modification of a pushing means that pushes an operation lever of a second locking means to a wire side.
Fig. 9 is a drawing illustrating an internal configuration of a tire chain tightening device according to a second embodiment.
Fig. 10 is a partially enlarged perspective view for describing a configuration of a second locking means in the tire chain tightening device according to the second embodiment.
Fig. 11 is a partially enlarged perspective view for describing an operating state of the second locking means in the tire chain tightening device according to the second embodiment.
Fig. 12 is a partially enlarged perspective view illustrating a feature of a modification in the tire chain tightening device according to the second embodiment.
Fig. 13 is a perspective view illustrating an internal configuration of a tire chain tightening device according to a third embodiment.
Fig. 14 is a partially enlarged perspective view for describing a configuration of a second locking means in the tire chain tightening device according to the third embodiment.
Fig. 15 is a back view of the tire chain tightening device according to the third embodiment.
Fig. 16 is a cross-sectional view taken along a line A-A in Fig. 15.
Fig. 17 is a partially enlarged view of Fig. 16.

### DESCRIPTION OF PREFERRED EMBODIMENTS

Hereinafter, embodiments of a tire chain tightening device of the present invention will be described in detail with reference to the drawings. Note that the embodiments shown below are a part of forms preferred for implementing the present invention. Therefore, even if a part of the configurations is modified, it can be considered to be a part of the present invention as long as it achieves effects of the invention.

### [First Embodiment: Configuration]

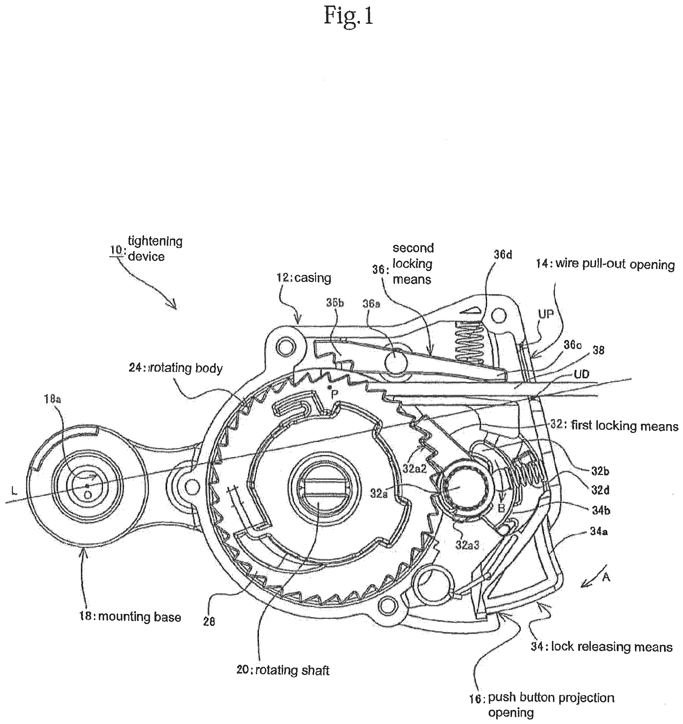

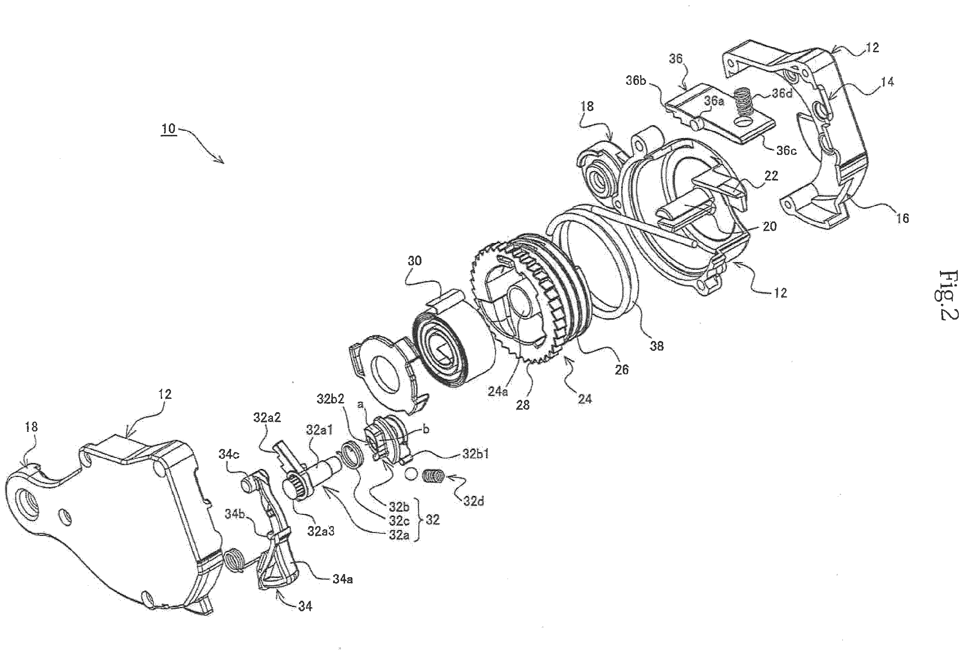

First, with reference to Figs. 1 and 2, embodiments of a tire chain tightening device according to a first embodiment will be described. In the drawings, Fig. 1 is a drawing illustrating a cross-sectional configuration of the tire chain tightening device according to the first embodiment, and Fig. 2 is an exploded perspective view of the tire chain tightening device according to the first embodiment. The tire chain tightening device (hereinafter simply referred to as a tightening device 10) according to this embodiment is basically constituted of a casing 12, a rotating body 24, a first locking means 32, a lock releasing means 34, and a second locking means 36.

The casing 12 is a case that houses the rotating body 24, the first locking means 32, the lock releasing means 34, the second locking means 36, and the like, which will be described in detail later. On an outer periphery of the casing 12, at least a pull-out opening (hereinafter referred to as a wire pull-out opening 14) of a wire 38, which will be described in detail later, a projection opening (hereinafter referred to as a push button projection opening 16) of a release button 34a in the lock releasing means 34, which will be described in detail later, and a mounting base 18 are disposed. Inside the casing 12, at least a rotating shaft 20 for supporting the rotating body 24 is disposed.

In the casing 12 of this embodiment, the wire pull-out opening 14 has an elongated hole, and a pull-out position of the wire 38 at the wire pull-out opening 14 is configured to be movable to a radially outer peripheral side of the rotating body 24.

The rotating body 24 is an element having a role of winding and pulling out (feeding) of the wire 38 for tightening a tire chain. The rotating body 24 includes at least a winding drum 26 and a saw blade gear 28. The winding drum 26 is an element for housing the wire 38, is configured to be able to wind the wire 38 on its outer periphery, and includes a mounting hole 24a relative to the rotating shaft 20. The saw blade gear 28 is an element attached on a side surface of the winding drum 26, and sawtooth-shaped unevenness is formed on an outer periphery of a disk. By the first locking means 32 and the second locking means 36 engaging with the unevenness of the saw blade gear 28, which will be described in detail later, rotation of the rotating body 24 can be suppressed.

In the rotating body 24, a winding spring 30 that generates a biasing force with the rotating shaft 20 secured to the casing 12 as a base point is internally mounted. According to such a configuration, when the wire 38 is pulled out, a reaction force against the pulling out is generated in the rotating body 24. Then, due to an action of the reaction force, the pulled-out wire 38 is automatically wound around the rotating body 24 (the winding drum 26).

The tightening device 10 according to this embodiment is configured to have a positional relationship in which a straight line L connecting a center point O of a mounting hole 18a of the mounting base 18 to a lower end point UD of the wire pull-out opening 14 and a feed point P of the wire 38 on the rotating body 24 are separated from one another.

The first locking means 32 is an element for suppressing the rotation of the rotating body 24. The first locking means 32 according to this embodiment is constituted of a locking member 32a, a lock control member 32b, and a torsion spring 32c. In the first locking means 32, a first locking tooth 32a2 and a second locking tooth 32a3 are disposed on a periphery of a turning shaft 32a1 with the turning shaft 32a1 in the locking member 32a as a base point. Roles of the first locking tooth 32a2 and the second locking tooth 32a3 are determined as follows, and a positional relationship is determined so as to play the roles.

Specifically, the first locking tooth 32a2 plays a role of preventing the rotating body 24 from rotating in a direction in which the wire 38 wound around the winding drum 26 is pulled out and meshes with the saw blade gear 28 so as to prevent the rotating body 24 from rotating clockwise (to the right) in Fig. 1.

On the other hand, the second locking tooth 32a3 plays a role of preventing the rotation of the rotating body 24 that rotates in a direction in which the wire 38 is wound around the winding drum 26 and meshes with the saw blade gear 28 so as to prevent the rotating body 24 from rotating counterclockwise (to the left) in Fig. 1.

Thus, in a state where the first locking tooth 32a2 is engaged with the saw blade gear 28, the second locking tooth 32a3 is in a state of being separated from the saw blade gear 28, and in a state where the second locking tooth 32a3 is engaged with the saw blade gear 28, the first locking tooth 32a2 is in a state of being separated from the saw blade gear 28.

The lock control member 32b is a member that controls a movement of the locking member and includes a pushing projection 32b1 and a bearing rotating part 32b2 on its outer periphery part. The bearing rotating part 32b2 is an element to which a pushing force by a pushing means 32d is applied with the casing 12 as a base point and has a pushing force bearing part ***a*** and a push rotating part ***b***. The pushing force bearing part ***a*** is a part that stably holds the lock control member 32b in a state of receiving the pushing force, and the push rotating part ***b*** has a role of converting the applied pushing force to a force that rotates the lock control member 32b and turning the lock control member 32b in a predetermined direction.

The torsion spring 32c has a role of transmitting a force in a torsional direction generated between the lock control member 32b and the locking member 32a to both as a relative repulsion force. Accordingly, in a state of the lock control member 32b being fixed, the first locking means 32 can turnably support the locking member 32a within a predetermined rotation angle with the turning shaft 32a1 as a base point. Specifically, in the first locking means 32 being secured in a state where the first locking tooth 32a2 is separated from the saw blade gear 28, when the rotating body 24 rotates in a direction in which the wire 38 is pulled out, it is possible to turn the locking member 32a within a range where the second locking tooth 32a3 can get over a saw blade of the saw blade gear 28, even when the second locking tooth 32a3 is at a position where the second locking tooth 32a3 is engaged with the saw blade gear 28. Thus, without exerting a rotation suppressing force in the direction where the wire 38 is pulled out, the second locking tooth 32a3 can make the rotation suppressing force act only in a direction where the rotating body 24 rotates in the direction where the wire 38 is wound.

The lock releasing means 34 is an element that plays a role of releasing rotation suppression of the rotating body 24 by the first locking means 32. The lock releasing means 34 according to this embodiment includes the release button 34a and a release projection 34b. Then, by the release button 34a being pushed in a direction of an arrow A, the lock releasing means 34 turns with a turning base point 34c (see Fig. 2) as a shaft, and the pushing projection 32b1 of the lock control member 32b is pushed by the release projection 34b. This action causes the lock control member 32b to turn in a direction of an arrow B.

When the lock control member 32b turns in the direction of the arrow B, the pushing means 32d pushes the pushing bearing part ***a***, and the lock control member 32d is brought into a stable state. In this state, the first locking tooth 32a2 of the locking member 32a is separated from the saw blade gear 28, and the second locking tooth 32a3 is engaged with the saw blade gear 28.

In this state, when the rotating body 24 rotates in the direction of pulling out the wire 38, the second locking tooth 32a3 is pushed by the saw blade gear 28, and a force in a direction opposite to the arrow B acts on the lock control member 32b. This causes the pushing force by the pushing means 32d to act on the push rotating part ***b,*** and the first locking means 32 returns to a locked state in which the first locking tooth 32a2 is engaged with the saw blade gear 28.

The second locking means 36 is a member that plays a role of assisting the rotation suppression of the rotating body 24 when a strong tensile force equal to or more than a predetermined value acts on the wire 38. The second locking means 36 according to this embodiment is disposed in an empty space disposed inside the casing 12 and on an outer peripheral side (with the center of the rotating body 24 as a base point) of the wire 38 that is disposed between the winding drum 26 and the wire pull-out opening 14 disposed in the casing 12.

The second locking means 36 is configured by including a third locking tooth 36b and an operation lever 36c with a turning center 36a as a point of support. The third locking tooth 36b is a part that is engaged with the saw blade gear 28 in the rotating body 24, and the operation lever 36c is a part to which a force for pushing the third locking tooth 36b against the saw blade gear 28 is applied. That is, when the turning center 36a is used as a point of support, the third locking tooth 36b is a point of action, and the operation lever 36c is a point of effort. In this embodiment, a pushing means 36d is disposed and configured to apply a biasing force in a pushing direction with the casing 12 as a base point with respect to the operation lever 36c. This configuration allows avoiding a situation in which the third locking tooth 36b of the second locking means 36 is engaged with the saw blade gear 28 in normal times.

### [Action]

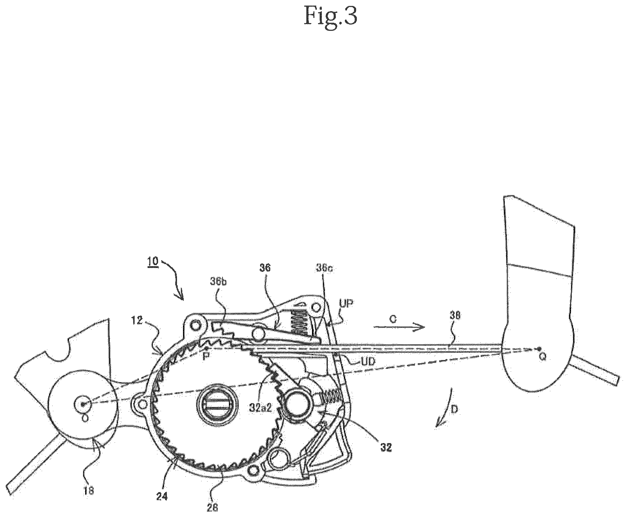

As illustrated in Fig. 3, the tightening device 10 having the configurations as described above is used by being disposed between two tightening points (in this embodiment, referred to as a first tightening point (which is a center point O of the mounting base 18) and a second tightening point Q). Specifically, the mounting base 18 constituting the casing 12 is secured to the first tightening point (the center point O), and the wire 38 is extended to a second tightening point Q side and connected to a tightening wire (not illustrated) included on a tire chain side. Such an arrangement form allows winding of the wire 38 to perform tightening of the tire chain.

In the tightening device 10 having the configurations as described above and the arrangement form as described above, when a force in the direction of pulling out the wire 38 (a force in a direction indicated by an arrow C) is applied to the rotating body 24, the rotation of the rotating body 24 is suppressed (locked) by the first locking means 32.

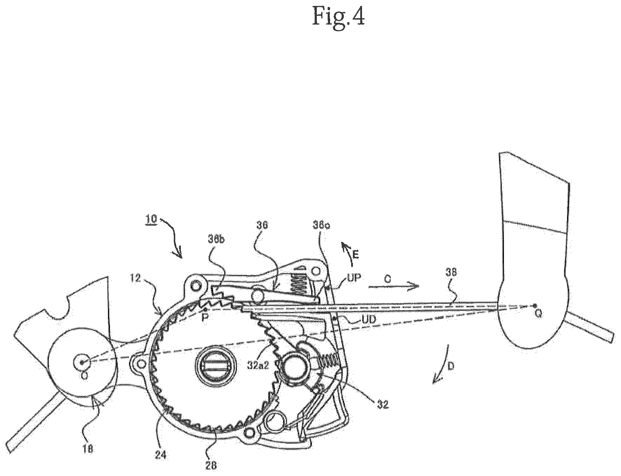

When a force that pulls out the wire 38 is further applied in a state where the rotation of the rotating body 24 is locked, as illustrated in Fig. 4, the tightening device 10 turns such that a distance of a line connecting the first tightening point O to the feed point (a point at a tangent position of the wire) P of the wire 38 in the rotating body 24 and a distance of a line connecting the feed point P to the second tightening point Q are shortened, that is, the feed point P of the wire 38 approaches a straight line connecting the first tightening point O to the second tightening point Q. Turning of the tightening device 10 occurs in a direction of an arrow D with the mounting base 18 as a base point.

This movement causes the wire 38 pulled out from the wire pull-out opening 14 to move so as to rise to the radially outer peripheral side of the rotating body 24, that is, from a lower end point UD side to an upper end point UP side of the wire pull-out opening 14.

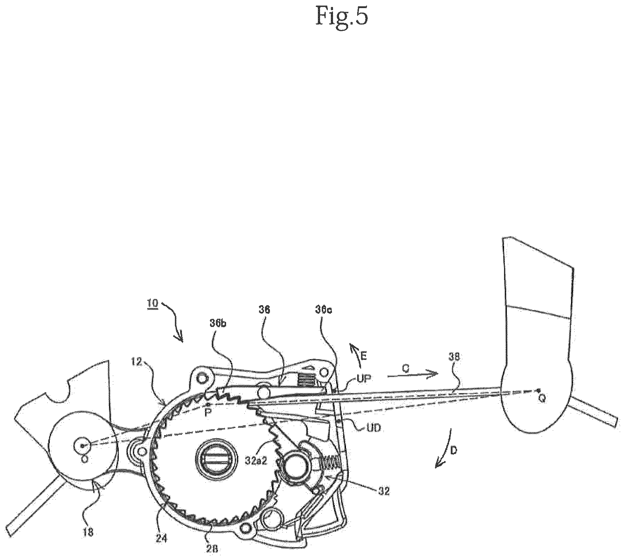

This movement of the wire 38 causes the operation lever 36c of the second locking means 36 to be pushed in a direction of an arrow E, and the third locking tooth 36b is engaged with the saw blade gear 28. As illustrated in Fig. 5, this causes the first locking tooth 32a2 by the first locking means 32 and the third locking tooth 36b by the second locking means 36 to be engaged with the saw blade gear 28. Accordingly, a stress generated between the first locking tooth 32a2 and the saw blade gear 28 due to turning is dispersed to the third locking tooth 36b.

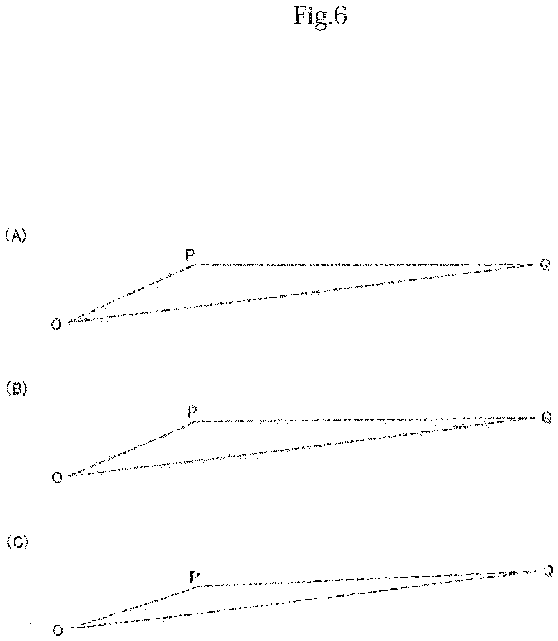

Fig. 6 includes drawings illustrating states of the feed point P of the wire 38 approaching the straight line connecting the first tightening point O to the second tightening point Q. Fig. 6A illustrates a relationship among three points in a state where only the first locking means 32 acts due to application of an ordinary tensile load. Fig. 6B illustrates the relationship among the three points in a state where the tightening device 10 starts turning in the direction indicated by the arrow D due to an increase of the tensile load to the wire 38. Furthermore, Fig. 6C illustrates the relationship among the three points in a state where the second locking means 36 acts due to the tensile load to the wire 38. From Figs. 6A to 6C, it can be seen that an apex P of a triangle OPQ is collapsing and approaching the straight line connecting the first tightening point O to the second tightening point Q.

### [Effect]

According to the tightening device 10 as described above, it is possible to prevent damage to an engagement part even when the tensile load equal to or more than a predetermined value is applied to the wire 38. Since the second locking means 36 utilizes a dead space disposed inside the casing 12 having a structure of a conventional tightening device or is disposed after configuring the casing 12 so as to slightly widen the dead space, new functions can be added without increasing a size of the tightening device 10. Furthermore, since the second locking means 36 operates by utilizing the movement of the wire 38 generated when the tensile load applied to the wire 38 exceeds the predetermined value, there is no need to add a mechanism for the operation.

### [Modification]

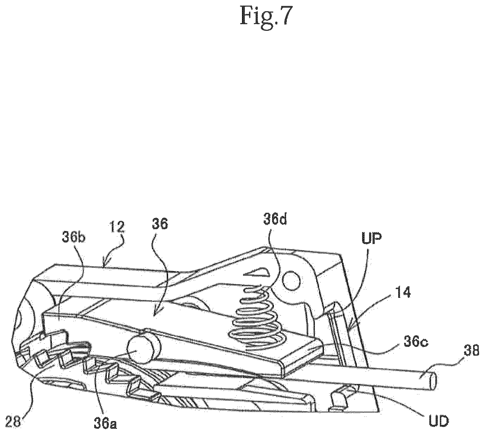

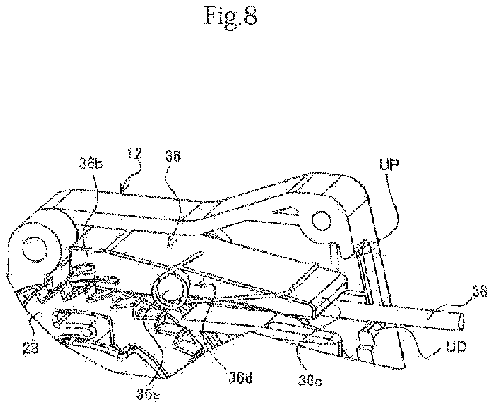

In the above-described embodiment, regarding the pushing means 36d of the second locking means 36 in the second locking means, it is indicated to use a helical spring having the same diameter. However, a specific configuration of the pushing means 36d does not matter as long as it can fulfill its function. Accordingly, a helical spring having different upper and lower diameters as illustrated in Fig. 7 may be employed as the pushing means 36d. Furthermore, a spring that generates a biasing force by torsion as illustrated in Fig. 8 may be employed.

### [Second Embodiment: Configuration]

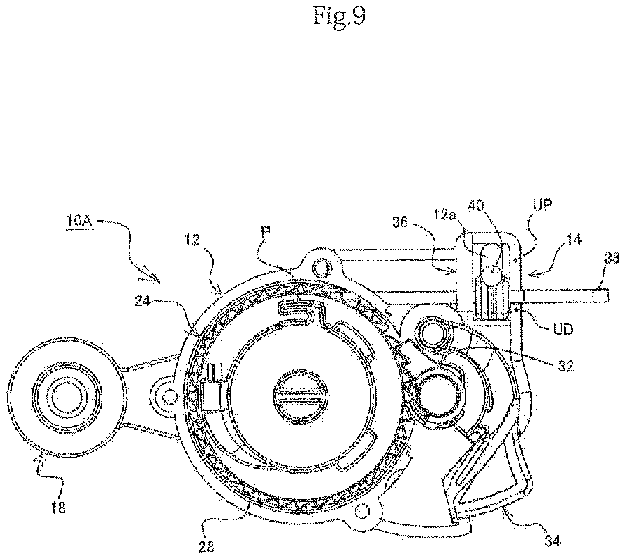

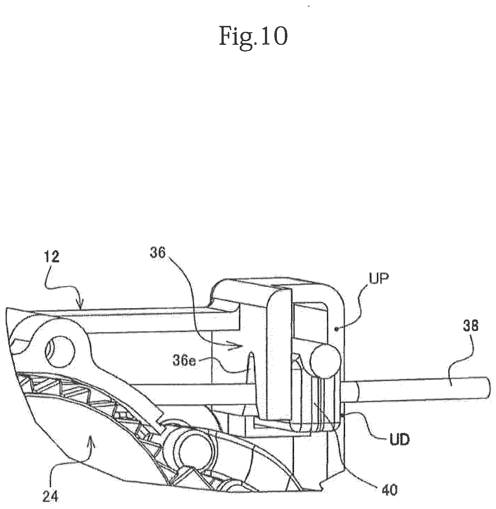

Next, with reference to Figs. 9 and 10, a tightening device according to a second embodiment will be described. Most of the configurations of a tightening device 10A according to this embodiment are similar to those of the tightening device 10 according to the above-described first embodiment. Accordingly, in the drawings, identical reference numerals are given to parts whose configurations are similar, and detail descriptions will be omitted.

A different point between the tightening device 10A according to this embodiment and the tightening device 10 according to the first embodiment lies in a form of the second locking means 36. While in the tightening device 10 according to the first embodiment, the second locking means 36 is of a lever type, the second locking means 36 is of a groove type in the tightening device according to this embodiment.

Specifically, a plate having a V-shaped groove 36e is disposed between the wire pull-out opening 14 in the casing 12 and the feed point P of the wire 38 in the rotating body 24, and this is used as the second locking means 36. The second locking means 36 of the tightening device 10A according to this embodiment is a plate having the V-shaped groove 36e with an opening disposed on the lower end point UD side of the wire pull-out opening 14 and configured to have a groove width that becomes narrower toward the upper end point UP side. The V-shaped groove 36e disposed in the second locking means 36 is formed wider than a diameter of the wire 38 on a lower end side and is configured to become narrower than the diameter of the wire 38 toward an upper end side.

In the casing 12 of the tightening device 10A according to this embodiment, a groove 12a extending in a direction along an up-down direction (an arrangement direction of the upper end point UP and the lower end point UD) of the wire pull-out opening 14 is disposed on a side wall between the second locking means 36 and the wire pull-out opening 14. Then, in a gap disposed between the second locking means 36 and the wire pull-out opening 14, a slider 40 slidable along the groove 12a is disposed.

The slider 40 has a through hole (not illustrated) on its principal surface that intersects with an extending direction of the wire 38 and is configured to allow the wire 38 to pass through it.

### [Action]

In the tightening device 10A having such features, when a force in the direction of pulling out the wire 38 is further applied after the rotation of the rotating body 24 is suppressed by the first locking means 32, similarly to the tightening device 10 according to the first embodiment, turning occurs with the mounting base 18 as a base point, and the wire 38 is forced to rise from the lower end point UD side to the upper end point UP side of the wire pull-out opening 14.

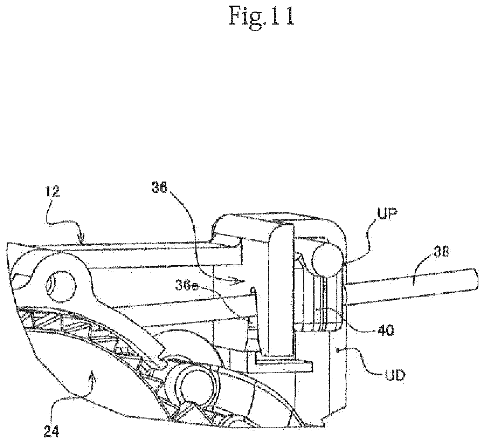

In association with such a movement of the wire 38, the slider 40 moves together with the wire 38. Then, as illustrated in Fig. 11, the wire 38 is fitted into a portion where a width of the V-shaped groove 36e of the second locking means 36 is narrow. Thus, the wire 38 becomes caught by a stopper, the force in the direction of pulling out the wire 38 is reduced, and a rotational force added to the rotating body 24 is suppressed.

### [Effect]

Even in the tightening device 10A having such configurations, it is possible to prevent the damage to the engagement part generated when the tensile load equal to or more than the predetermined value is applied to the wire 38. Since the second locking means 36 utilizes a dead space disposed inside the casing 12 having a structure of a conventional tightening device or is disposed after configuring the casing 12 so as to slightly widen the dead space, new functions can be added without increasing the size of the tightening device 10A. Furthermore, since the second locking means 36 operates by utilizing the movement of the wire 38 generated when the tensile load applied to the wire 38 exceeds the predetermined value, there is no need to add a mechanism for the operation.

### [Modification]

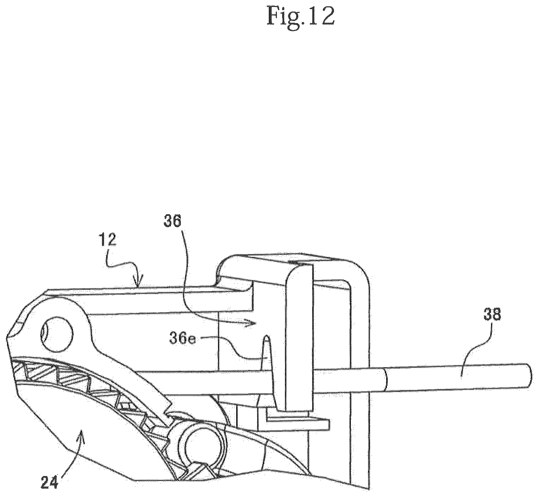

In the above-described embodiment, it is described that the slider 40 is disposed between the wire pull-out opening 14 and the second locking means 36. While the slider 40 is useful for stabilizing a sliding direction of the wire 38, as illustrated in Fig. 12, even in a state of omitting the slider 40, it is possible to function as the tightening device 10A according to this embodiment.

### [Third Embodiment: Configuration]

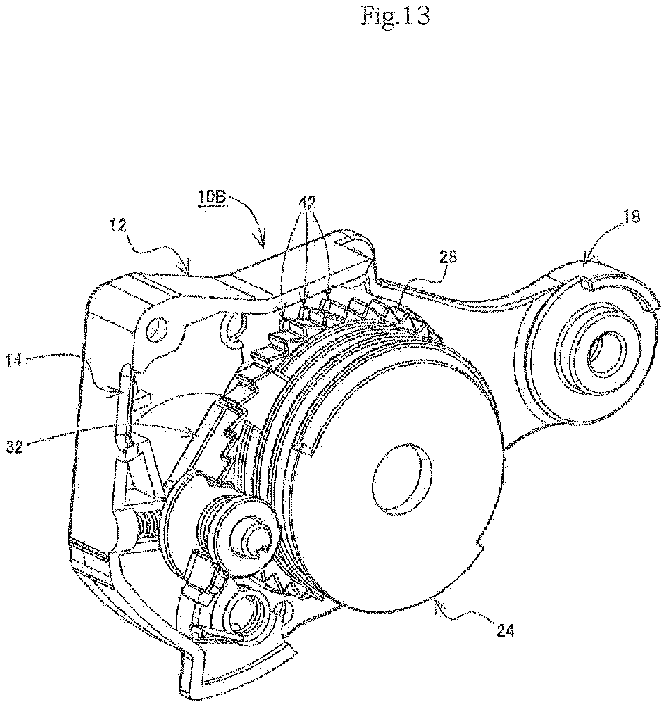

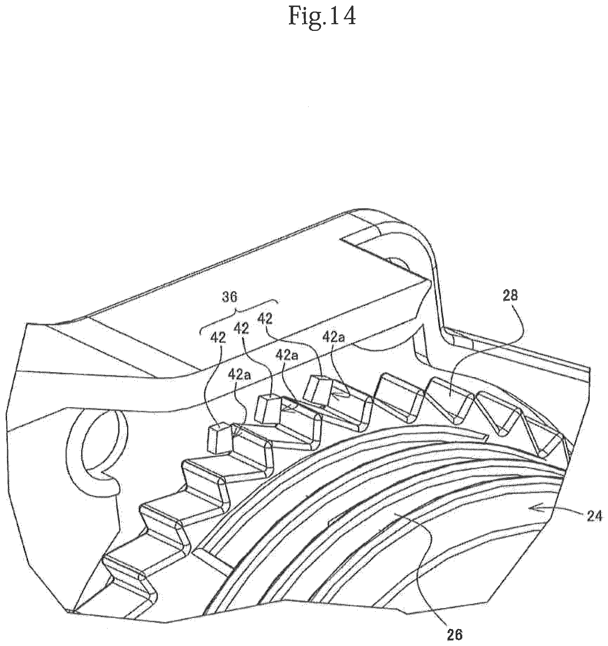

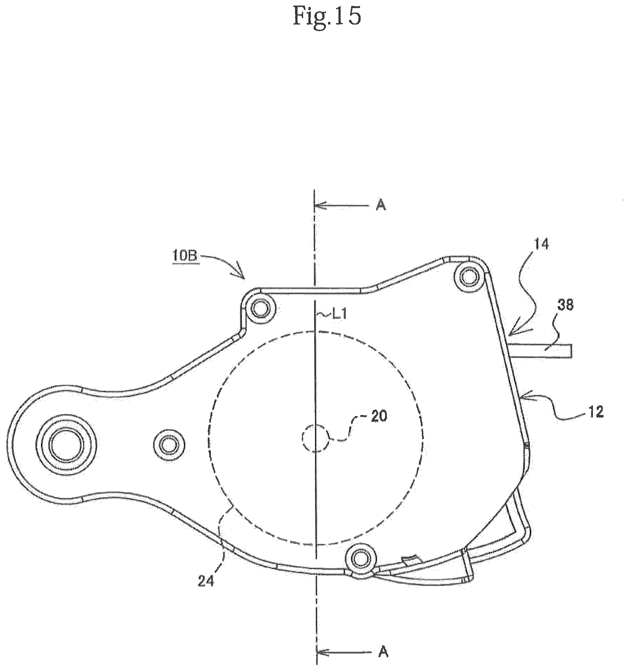

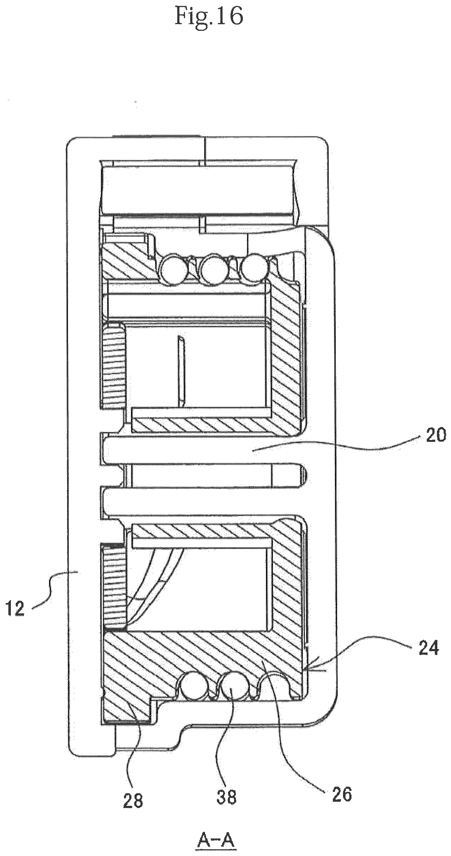

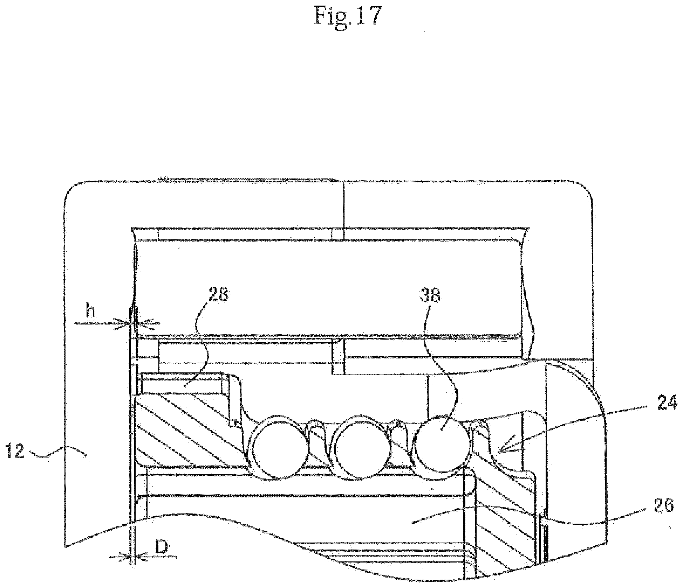

Next, with reference to Figs. 13 to 17, a tightening device according to a third embodiment will be described. In the drawings, Fig. 13 is a perspective view illustrating an exploded configuration in which a part of a casing of the tightening device according to the third embodiment is removed, and Fig. 14 is a partially enlarged view of the same portion. Fig. 15 is a back view of the tightening device according to the third embodiment, and Fig. 16 is a cross-sectional view taken along a line A-A in Fig. 15. Further, Fig. 17 is a partially enlarged view of Fig. 16.

Most of the configurations of a tightening device 10B according to this embodiment are similar to those of the tightening devices 10 according to the above-described first and second embodiments. Accordingly, in the drawings, identical reference numerals are given to parts whose configurations are similar, and detail descriptions will be omitted.

A different point between the tightening device 10B according to this embodiment and the tightening devices 10, 10A according to the first and second embodiments lies in an arrangement and a configuration of the second locking means 36. In the tightening device 10B according to this embodiment, the second locking means 36 is configured by disposing projections 42 on the casing 12. Specifically, the projections 42 are disposed on a side wall of the casing 12 adjacent to a side on which the saw blade gear 28 in the rotating body 24 is disposed, and these are used as the second locking means 36.

The second locking means 36 is disposed on the side wall located on a wire pull-out opening 14 side with a perpendicular line L1 passing through the rotating shaft as a base point and above a circumference of teeth of the saw blade gear 28. The second locking means 36 has abutting surfaces 42a that abut against the teeth of the saw blade gear 28, and its height h is equal to or less than a gap D formed between the rotating body 24 (the saw blade gear 28) and the casing 12 when there is no load.

### [Action]

In the tightening device 10B having such configurations, when the force in the direction of pulling out the wire 38 is further applied after the rotation of the rotating body 24 is suppressed by the first locking means 32, the rotating body 24 inclines in a pulling direction by the wire 38.

The inclination of the rotating body 24 is generated with the rotating shaft 20 as a base point. The rotating body 24 includes the winding drum 26 and the saw blade gear 28, and a winding drum 26 side receives a stronger tensile load. Thus, the saw blade gear 28 located on the wire pull-out opening 14 side with respect to the perpendicular line L1 passing through the rotating shaft 20 (for example, the center of the rotating shaft 20) is inclined in a direction of narrowing the gap D between the side wall of the casing 12 and the saw blade gear 28.

Thus, the teeth of the saw blade gear 28 is engaged with the projections 42 configuring the second locking means 36 to suppress the rotation of the rotating body 24.

### [Effect]

Even in the tightening device 10B having such configurations, it is possible to prevent the damage to the engagement part generated when the tensile load equal to or more than the predetermined value is applied to the wire 38. Since the second locking means 36 is disposed by utilizing a dead space disposed inside the casing 12 having a structure of a conventional tightening device, new functions can be added without increasing the size of the tightening device 10. Furthermore, since the second locking means 36 operates by utilizing the inclination of the rotating body 24 generated when the tensile load applied to the wire 38 exceeds the predetermined value, there is no need to add a mechanism for the operation.

In the above-described embodiments, while the configurations of the first to third embodiments have been separately described respectively, it is needless to say that even when each configuration is selectively combined, it becomes a part of the present invention.

### DESCRIPTION OF REFERENCE SIGNS

- 10, 10A, 10B...: tightening device
- 12...: casing
- 12a...: groove
- 14...: wire pull-out opening
- 16...: push button projection opening
- 18...: mounting base
- 18a...: mounting hole
- 20...: rotating shaft
- 24...: rotating body
- 26...: winding drum
- 28...: saw blade gear
- 30...: winding spring
- 32...: first locking means
- 32a...: locking member
- 32a1...: turning shaft
- 32a2...: first locking tooth
- 32a3...: second locking tooth
- 32b...: lock control member
- 32b1...: pushing projection
- 32b2...: bearing rotating part
- 32c...: torsion spring
- 32d...: pushing means
- 34...: lock releasing means
- 34a...: release button
- 34b...: release projection
- 34c...: turning base point
- 36...: second locking means
- 36a...: turning center
- 36b...: third locking tooth
- 36c...: operation lever
- 36d...: pushing means
- 36e...: V-shaped groove
- 38...: wire
- 40...: slider
- 42...: projection
- 42a...: abutting surface

## Claims

1. A tire chain tightening device that feeds and winds a wire by using a rotating body included inside a casing, the tire chain tightening device comprising:
a first locking means that suppresses rotation of the rotating body to inhibit the wire from being pulled out; and
a second locking means that operates due to a change generated in the wire or in the rotating body and inhibits the rotating body from rotating when a load that exceeds a tensile load normally applied to the wire is applied.

2. The tire chain tightening device according to claim 1, wherein
the casing has a mounting base relative to a tightening point of the tire chain and a wire pull-out opening, and a straight line connecting the mounting base to the wire pull-out opening is radially separated from a wire feed position in the rotating body, and
the second locking means is configured to operate due to a movement of the wire pulled out of the casing in a radial direction of the rotating body.

3. The tire chain tightening device according to claim 2, wherein
the second locking means is a lever having a point of effort and a point of action, the point of effort is moved by the movement of the wire, and the point of action is brought into contact with the rotating body.

4. The tire chain tightening device according to claim 2, wherein
the second locking means is configured to operate by sandwiching the wire.

5. The tire chain tightening device according to claim 1, wherein
the second locking means is a projection that is brought into contact with the rotating body being inclined due to the tensile load applied to the wire.
